# EUROPÄISCHE PATENTSCHRIFT

(11) **EP 1 866 632 B1**
(45) Veröffentlichungstag und Bekanntmachung des Hinweises auf die Patenterteilung: **08.05.2019**
(21) Anmeldenummer: 06707632.3
(22) Anmeldetag: 22.03.2006
(51) Int. Cl.: G01N 23/04

(54) **PANORAMA-AUFNAHMEEINRICHTUNG FÜR EIN PANORAMA-RÖNTGENGERÄT**
PANORAMIC RECORDING DEVICE FOR A PANORAMIC X-RAY MACHINE
ENSEMBLE DE RECEPTION DE PANORAMA POUR UN APPAREIL RADIOGRAPHIQUE EN PANORAMA

(30) Priorität: 05.04.2005 DE 102005015707
(43) Veröffentlichungstag der Anmeldung: 19.12.2007
(60) Teilanmeldung: 10011548.4
(73) Patentinhaber: Thoms, Michael, 91054 Erlangen (DE)
(72) Erfinder: Thoms, Michael, 91054 Erlangen (DE)
(74) Vertreter: Meissner Bolte Partnerschaft mbB
(86) Internationale Anmeldenummer: PCT/EP2006/002619
(87) Internationale Veröffentlichungsnummer: WO 2006/105868

(56) Entgegenhaltungen:
- EP-A- 0 904 734
- WO-A-98/05256
- DE-A1- 10 148 412
- DE-U1- 9 421 296
- DE-U1- 9 421 296
- GB-A- 2 274 964
- US-A- 5 844 961
- US-B1- 6 219 401

## Beschreibung

Die Erfindung betrifft eine Panorama-Aufnahmeeinrichtung für ein Panorama-Röntgengerät gemäß dem Oberbegriff des Anspruchs 1.

Klassische Panorama-Röntgengeräte weisen eine Röntgenquelle und eine Panoramakassette auf, die gemeinsam um eine in der Regel vertikale Achse verschwenkbar sind. Zwischen der Röntgenquelle und der Panoramakassette wird ein zu untersuchender Gegenstand, z. B. der Kiefer eines Patienten positioniert.

Ein in der Kassette angeordneter Filmhalter ist in der Kassette hinter einem Aufnahmeschlitz verschiebbar angeordnet und wird in Abhängigkeit vom Drehwinkel des Röntgenkanone und Panoramakassette verbindenden Arms am Aufnahmeschlitz vorbeibewegt.

Auf dem Film erhält man so ein Panoramabild des Objekts, welches sich aus der Hintereinanderfügung von einzelnen Schlitzbildern ergibt.

Aus verschiedenen Gründen wird zunehmend bevorzugt, Röntgenbilder nicht mehr mit klassischen Silberfilmen zu erzeugen sondern mit Sensoren aufzunehmen, welche elektrische Signale bereitstellen. Hierdurch werden die silberhaltigen Filme eingespart, man kann die Bilder elektronisch bearbeiten, und auch die Archivierung der Aufnahmen ist vereinfacht.

Panorama-Röntgengeräte sind verhältnismäßig teure Geräte mit einer hohen Lebenserwartung.

Es besteht daher ein Interesse daran, einerseits die teuren schon vorhandenen Einrichtungen weiter verwenden zu können, andererseits trotzdem von den Vorteilen der modernen digitalen Bildverarbeitung Gebrauch machen zu können.

Es sind schon Umrüstbausätze für Panoramageräte mit Filmkassetten auf dem Markt angeboten worden, bei denen ein CCD-Zeilensensor an der Kassette befestigt wird. Die Kabelstränge des Sensors sind jedoch mit dem Panorama-Röntgengerät verbunden. Dies ist rechtlich als ein Eingriff in das Gerät einzuordnen, so dass nach dem Medizinproduktegesetz eine komplette Neuabnahme des Geräts nach dem Umbau notwendig ist. Hierfür wird u. a. eine sicherheitstechnische Prüfung gefordert, welche einen Rücktransport des Geräts zum Hersteller notwendig macht. Dort sind auch noch weitere Prüfungen erforderlich. Daher ist der Aufwand für eine solche Umrüstung hoch, die Umrüstung teuer. Dies ist auch darauf zurückzuführen, dass ein auf der Kassette angeordneter CCD-Sensor über eine Vielzahl von mechanischen Drehgelenken geführt werden muss und diese nur in geringen Stückzahlen hergestellt werden können, da die jeweiligen CCD-Sensoren immer herstellerspezifisch sind und sich viele Wettbewerber mit unter-schiedlichen Geräten den Markt teilen.

Typischerweise haben Panorama-Kassetten nach DIN 6832, Teil 1 eine geringe Dicke von etwa 15 mm bei Außenabmessungen von etwa 160x330 mm (Kassetten-Nenngröße 13x30 cm) bzw. 180x330 (Nenngröße 15x30 cm).

Als Stand der Technik werden ferner US 5 844 961 A und DE 101 48 412 A1 genannt.

Die vorliegende Erfindung soll eine Panorama-Aufnahmeeinrichtung gemäß dem Oberbegriff des Anspruchs 1 so weiterbilden, dass mit ihr die Vorteile einer digitalen Bildverarbeitung erhalten werden, eine neuerliehe Abnahme des gesamten Panorama-Röntgengeräts dagegen nicht erforderlich ist.

Diese Aufgabe ist erfindungsgemäß gelöst durch eine Panorama-Aufnahmeeinrichtung mit den im Anspruch 1 angegebenen Merkmalen.

Bei der erfindungsgemäßen Panorama-Aufnahmeeinrichtung ist in die Panoramakassette als Lichtdetektor ein insbesondere schmales Detektor-Array mit mehreren Detektorzeilen eingebaut, die gemäß der Längserstreckung des Aufnahmeschlitzes hintereinander angeordnete Pixel aufweisen. Die Ausgangssignale der Detektorzeilen werden drahtlos (durch Funk oder mittels infraroter Strahlung) ausgelesen und zu einer Verarbeitungseinheit übermittelt. Die Stellung der Panoramakassette im Raum (bzw. bezüglich des ruhenden Objekts) wird durch einen Stellungsgeber (Stellungserfassungsmittel) gemessen, und dessen Ausgangssignal wird ebenfalls drahtlos auf die Auswerteeinheit gegeben. Dann kann die Verarbeitungseinheit die Bildzeilen unter Verwendung des Ausgangssignals des Stellungsgebers als Adressiersignal in einem Speicher zeilenweise zum Gesamtbild zusammensetzen, wobei das Detektor-Array eine Ausleseschaltung umfasst, die die Pixel der parallel zum Aufnahmeschlitz verlaufenden Spalten gemäß dem Ausgangssignal des Stellgebers in Zeilenrichtung verschiebt. Letzteres ist im Hinblick auf die Erhöhung der Empfindlichkeit der Aufnahmeeinheit von Vorteil. Dies ermöglicht es, mit kleineren Strahlungsdosen zu arbeiten.

Dadurch, dass die Datenübertragung zur Verarbeitungseinheit drahtlos erfolgt, und die Detektorzeile und der Stellungsgeber sowie die mit diesen verbundenen elektronischen Komponenten aus einer Batterie oder einem Akkumulator betrieben werden, ist eine galvanische Kopplung zwischen dem Detektor-Array und dem Panorama-Röntgengerät nicht notwendig.

Dies bedeutet, dass man bei der Abnahme eines auf digitale Bilderfassung umgebauten klassischen Panorama-Röntgengeräts nur noch die Bildqualität nach Röntgenverordnung nachzuweisen hat, eine Risikobewertung nach dem Medizinproduktegesetz dagegen entfallen kann, weil das Arbeiten mit der Kassette bereits zum bestimmungsgemäßen Gebrauch des klassischen Panorama-Röntgengeräts gehörte.

Eine erfindungsgemäße Panorama-Aufnahmeeinrichtung lässt sich mit geringem Verdrahtungsaufwand und damit geringen Kosten realisieren.

Man kann die erfindungsgemäß mit einem drahtlos ausgelesenen Detektor-Array versehene Panoramakassette in den gemäß DIN genormten Größen anbieten. Damit ist eine solche Kassette mit allen entsprechenden klassischen Panorama-Röntgengeräten kompatibel. Die erfindungsgemäße Panorama-Aufnahmeeinrichtung kann somit in höheren Stückzahlen verkauft werden, was die Herstellungskosten und damit die Umrüstungskosten herabsetzt.

Vorteilhafte Weiterbildungen der Erfindung sind in Unteransprüchen angegeben.

Die Weiterbildung der Erfindung gemäß Anspruch 2 gestattet auf sehr einfache Weise das Zusammensetzen der einzelnen schlitzförmigen Teilbilder zu einem Gesamtbild schon beim Abspeichern der einzelnen Bildzeilen.

Die Weiterbildung der Erfindung gemäß Anspruch 3 gestattet es, die Übertragung sowohl der Bildsignale als auch der Stellungssignale mit einer einzigen Datenübertragungsstrecke zu bewerkstelligen. Hierdurch wird die Aufnahmeeinrichtung nochmals besonders einfach.

Die Weiterbildung der Erfindung gemäß Anspruch 4 gestattet es, das Detektor-Array und die das Array tragende Mechanik als eine Einheit an das Röntgengerät anzusetzen und von dieser wieder abzunehmen und trotzdem eine feste Lage der Detektorzeilen bezüglich des Aufnahmeschlitzes zu gewährleisten. Dabei kann die gesamte Einheit dieselbe Außengeometrie aufweisen wie eine Kassette für einen klassischen Röntgenfilm.

Gemäß Anspruch 5 kann man die Stellung der Detektorzeilen bezüglich eines sie tragenden Schlittens auf besonders einfache Weise von der mechanischen Antriebsbewegung für die klassische Kassette ableiten.

Alternativ kann man in der Panoramakassette ein der Winkelstellung der Kassette bezüglich der Geräte-Drehachse entsprechendes Signal dadurch erhalten, dass man das mechanische Ausgangssignal eines Antriebs verwendet, durch welchen bei der klassischen Panoramakassette der Filmhalter verschoben wird.

Wünscht man bei einer erfindungsgemäßen Panorama-Aufnahmeeinrichtung die Möglichkeit der Aufnahme auf einem klassischen Röntgenfilm zu erhalten, so muss der auf dem Filmhalter arbeitende mechanische Antrieb für die digitale Bilderfassung angehalten werden, damit das Detektor-Array ständig hinter dem Aufnahmeschlitz stehen bleiben kann. Man muss also die mechanische Verbindung zwischen der Geräte-Drehachse und dem Filmhalterantrieb unterbrechen. In solchen Fällen ist es dann vorteilhaft, gemäß Anspruch 6 den Stellungsgeber räumlich getrennt von der Panoramakassette vorzusehen und dann sein Ausgangssignal über einen getrennten Übertragungskanal zur Verarbeitungseinheit zu führen, wie im Anspruch 6 angegeben.

Bei einer Kassetteneinheit gemäß Anspruch 7 kann man durch einfaches Umschalten zwischen den beiden Arbeitsstellungen einer Kupplung zwischen der klassischen Arbeitsweise mit Röntgenfilm und der Arbeitsweise mit digitaler Bilderfassung umschalten.

Bei einer Aufnahmeeinrichtung gemäß Anspruch 8 hat man über die unter kleinem Winkel angeschnittene Faseroptik eine Abbildung eines langen Aufnahmeschlitzes auf eine kurze Detektorzeile. Kurze Detektorzeilen, die für sichtbares Licht empfindlich sind, sind als verhältnismäßig preiswerte Komponenten auf dem Markt erhältlich.

Nachstehend wird die Erfindung anhand von Zeichnungen näher erläutert. Diese zeigen:
- Figur 1:: Eine schematische Darstellung eines mit klassischen Röntgenfilmen arbeitenden Panorama-Röntgengeräts;
- Figur 2:: Eine schematische Darstellung eines Panorama-Röntgengeräts ähnlich zu demjenigen nach Figur 1, welches jedoch auf digitale Bilderfassung umgerüstet ist;
- Figur 3:: Eine ähnliche Ansicht eines Panorama-Röntgengeräts wie Figur 1, welches sich jedoch sowohl mit klassischen Röntgenfilmen als auch mit digitaler Bilderfassung arbeiten kann;
- Figur 4:: Einen Schnitt durch eine Detektorzeile und den dieser benachbarten Aufnahmeschlitz eines Panorama-Röntgengeräts, geschnitten in der Schlitzmitte; und
- Figur 5:: Einen Schnitt durch eine abgewandelte Aufnahmeeinheit in einer zur Kassetten-Verstellrichtung senkrechten Ebene.

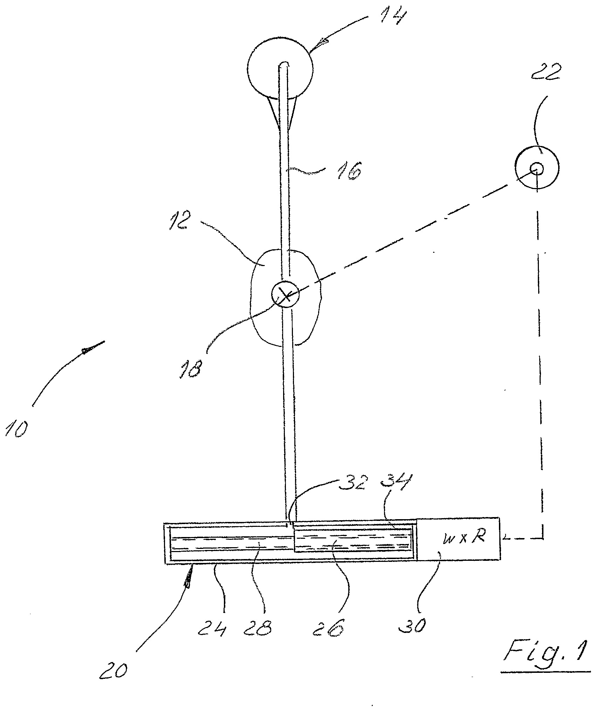

In Figur 1 ist mit 10 insgesamt ein Panorama-Röntgengerät, mit 12 ein zu untersuchendes Objekt bezeichnet.

Das Panorama-Röntgengerät umfasst eine Röntgenquelle 14, die eine Röntgenröhre, ein dieses umgebendes Gehäuse und einen Austrittsschlitz für Röntgenlicht aufweist, wie an sich bekannt und in der Zeichnung nicht näher dargestellt. Die Röntgenquelle 14 ist auf einem Stab 16 angebracht, der von einer um eine in der Regel vertikale Achse drehbaren Welle 18 getragen ist. Das freie Ende des Stabs 16 trägt eine Kassetteneinheit 20. Die Welle 18 wird durch einen Motor 22 in Drehung versetzt.

Die Kassetteneinheit 20. hat ein Gehäuse 24, in welchem ein Filmhalter 26 mittels einer Gewindespindel 28 verschiebbar ist. Die Gewindespindel 28 ist über ein Getriebe 30 ebenfalls mit der Welle des Motors 22 gekoppelt.

In der der Röntgenquelle 14 zugewandten Wand des Gehäuses 24 ist ein Aufnahmeschlitz 32 vorgesehen. Durch diesen kann Röntgenlicht, welches das Objekt 12 durchsetzt hat, ins Innere des Gehäuses 24 fallen.

Das Getriebe 30 ist so ausgelegt, dass es den Filmhalter 26 um eine Strecke verschiebt, die gleich dem Drehwinkel w der Achse 18 multipliziert mit dem Abstand R zwischen Aufnahmeschlitz 32 und Achse der Welle 24 ist.

Dreht man den Stab 16, so werden diejenigen Bereiche des Objekts 12 nicht scharf abgebildet, die weiter von der Achse der Welle 18 entfernt sind. Wünscht man mit dem Panorama-Röntgengerät 10 eine ausgedehnte Struktur wie den Kiefer eines Patienten abzubilden, so wird die Achse 18 ihrerseits durch eine nicht näher gezeigte Mechanik entsprechend der Krümmung des Kiefers bewegt .

Auf diese Weise erhält man dann beim Drehen des Stabs 16 und Bewegen der Achse der Welle 18 auf einem vom Filmhalter 26 getragenen Film 34 eine ebene Röntgenbild-Abwicklung eines Kiefers.

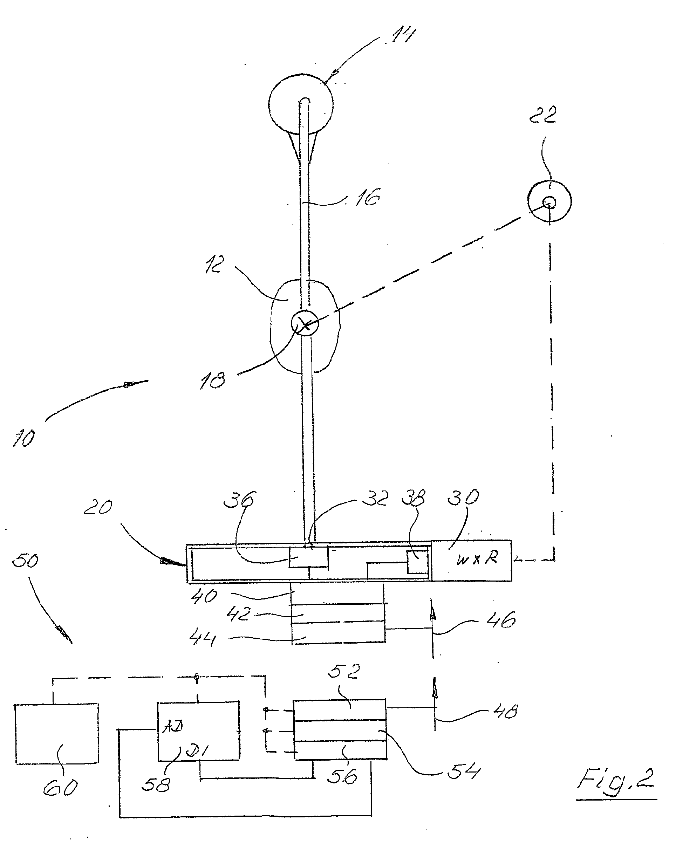

Bei dem in Figur 2 gezeigten Panorama-Röntgengerät sind Komponenten, die obenstehend unter Bezugnahme auf Figur 1 schon erläutert wurden, wieder mit denselben Bezugszeichen versehen. Diese Komponenten brauchen nicht nochmals näher beschrieben zu werden.

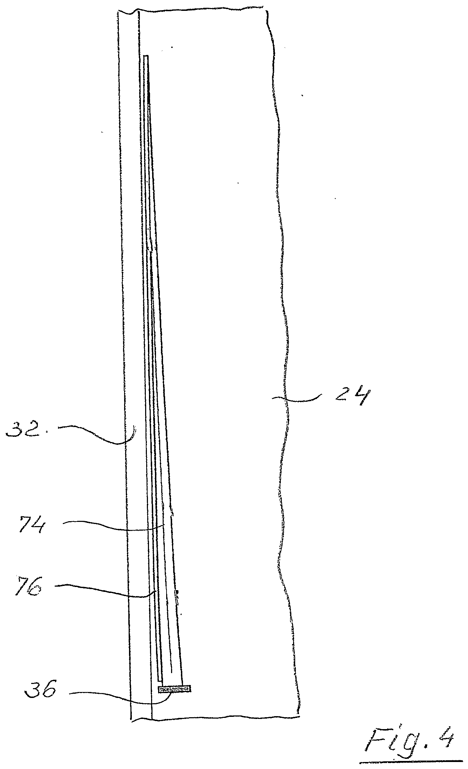

Hinter dem Aufnahmeschlitz 32 ist eine Detektorzeile 36 angeordnet, deren Aufbau unter Bezugnahme auf Figur 4 später noch genauer beschrieben wird. Der Filmhalter 22 und seine Verstellmechanik sind entfernt, und der Ausgang des Getriebes 30 ist direkt mit einem Drehgeber 38 verbunden.

Es sei hier angenommen, dass die Detektorzeile 36 eine Ausleseschaltung mit umfasst und der Drehgeber 38 ebenfalls eine Ausleseschaltung beinhaltet. Es sei ferner angenommen, dass die Ausgangssignale von Detektorzeile 36 und Drehgeber 38 digital in Paralleldarstellung vorliegen.

Ein Zeichenverkettungskreis 40 ist mit den Ausgängen von Detektorzeile 36 und Drehgeber 38 verbunden und setzt die beiden Ausgangssignale zu einem Datenpaket zusammen.

Dieses wird in einem Parallel/Seriell-Umsetzer 42 in eine Aufeinanderfolge von Bits umgesetzt, welche über ein Modemteil 44 an eine Antenne 46 abgegeben wird.

Eine Antenne 48, die Teil einer insgesamt mit 50 bezeichneten Verarbeitungseinheit ist, empfängt die Signale der Antenne 46 und gibt diese auf ein Modemteil 52. Über dieses gelangen die Signale auf einen Seriell/Parallel-Umsetzer 54. An dessen Ausgang wird das zusammengesetzte Datenpaket zurückerhalten.

Der Ausgang des Seriell/Parallel-Umsetzers 54 ist mit dem Eingang eines Zeichen-Trennkreises 56 verbunden, der die von der Detektorzeile 36 erzeugten Bildsignale vom Ausgangssignal des Drehgebers 38 trennt.

Mit dem so wiedergewonnen Ausgangssignal des Drehgebers 38 wird (nach geeigneter Skalierung) die Adressklemme AD eines Speichers 58 beaufschlagt, dessen Dateneingangsklemme DI mit dem anderen Ausgang des Zeichen-Trennkreises 56 verbunden ist, der die Bildsignale bereitstellt.

Eine Steuereinheit 60 steuert die Abfolge der verschiedenen bei der oben beschriebenen Datenübertragung durchzuführenden Teilschritte und sorgt für die richtige Synchronisierung der Bauelemente.

Die Steuereinheit 60 kann auch über die Datenübertragungsstrecke direkt Befehle an die Detektorzeile 36 und den Drehgeber 38 abgeben, um diese zur Abgabe eines jeweils neuen Messwerts zu veranlassen.

Man erkennt, dass mit der in Figur 2 gezeigten Panorama-Aufnahmeeinrichtung ein digitales Röntgenbild erhalten wird, ohne dass in die sicherheitsrelevanten Teile des Panorama-Röntgengeräts eingegriffen werden muss. Insbesondere hat die Kassetteneinheit 20 die gleichen geometrischen Abmessungen wie die herkömmliche Film-Kassetteneinheit 20 nach Figur 1, so dass man eine solche leicht gegen eine Kassetteneinheit mit digitaler Bilderfassung austauschen kann.

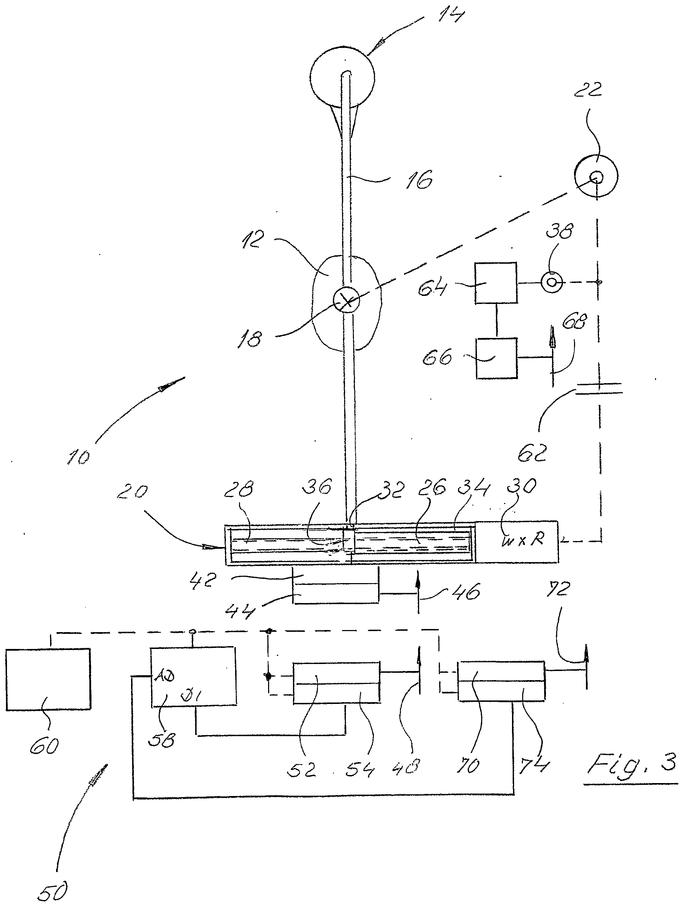

Auch beim Ausführungsbeispiel nach Figur 3 sind Gerätekomponenten, die obenstehend schon beschrieben wurden, wieder mit denselben Bezugszeichen versehen, diese Komponenten brauchen auch nicht nochmals detailliert beschrieben zu werden.

Das Panorama-Röntgengerät nach Figur 3 ähnelt vom mechanischen Aufbau her stark demjenigen nach Figur 1 mit der einzigen Ausnahme, dass auf das Ende des Filmhalters 26 eine in Bewegungsrichtung des Filmhalters sehr kurz bauende Detektorzeile 36 angebaut ist.

Außerdem ist zwischen dem Eingang des Getriebes 30 und der Welle des Motors 22 eine Schaltkupplung 62 vorgesehen.

Hat man die Schaltkupplung 62 geöffnet und wurde die Detektorzeile 36 zuvor in die in der Zeichnung wiedergegebene Stellung bewegt, in welcher sie hinter dem Aufnahmeschlitz 32 steht, so kann man mit digitaler Bilderfassung arbeiten. Die notwendige Information über die Winkelstellung des Panorama-Röntgengeräts bezüglich des Objekts 12 erhält man nun dadurch, dass der Drehgeber 38 direkt an die Welle des Motors 20 angeschlossen ist.

Für den Drehgeber 38 ist nun ein eigener Parallel/Seriell-Umsetzer 64 und ein eigenes Modemteil 66 vorgesehen, an welches eine Antenne 68 angeschlossen ist. Das Modemteil 66 arbeitet mit einer vom Modemteil 44 unterschiedlichen Frequenz, die mit der Frequenz eines weiteren Modemteils 70 übereinstimmt, welches über eine Antenne 72 empfängt.

An das Modemteil 70 ist ein Seriell/Parallel-Umsetzer 74 angeschlossen.

In der Datenübertragungsstrecke zwischen der Detektorzeile 36 und der Bearbeitungseinheit 50 können somit der Zeichenverkettungskreis 40 und der Zeichen-Trennkreis 54 entfallen.

Man erkennt, dass bei geöffneter Schaltkupplung 62 das in Figur 3 gezeigte Panorama-Röntgengerät ein digitales Panoramabild liefert, wie das Panorama-Röntgengerät nach Figur 2, während bei geschlossener Schaltkupplung 62 ein Film 34 auf klassische Weise belichtet werden kann, wenn die höhere Auflösung des Röntgenfilms in besonderen Fällen benötigt wird.

Figur 4 zeigt, wie man ein schlitzförmiges Röntgenbild mit großer vertikaler Erstreckung des Aufnahmeschlitzes (etwa 15 cm) unter Verwendung einer kleine Abmessung aufweisenden Detektorzeile 36 aufnehmen kann.

Auf die vordere Stirnfläche einer Faseroptik 74 ist eine Phosphorschicht 76 aufgebracht, die Röntgenlicht in sichtbares Licht umsetzt. Die Faseroptik 76 hat die Form eines sehr schlanken rechtwinkligen Dreiecks mit einem spitzen Winkel beim einen Ende der Hypotenuse von etwa 2°. Die einzelnen Fasern der Faseroptik verlaufen parallel zu Hypotenuse. Diejenigen Enden der Faseroptik, die bei der Rückseite der Phosphorschicht 76 liegen, sind somit Ellipsen, deren große Achsen deutlich größer sind als ihre kleinen Achsen.

Das in Figur 4 untere Ende der Faseroptik 74 ist senkrecht zur Faserrichtung abgeschnitten. Die entsprechende transversale Stirnfläche der Faseroptik 74 trägt die Detektorzeile 36, welche durch eine CCD-Komponente gebildet sein kann.

In Abwandlung der oben beschriebenen Ausführungsbeispiele könnte man auch in Betracht ziehen, dass auch bei der digitalen Bilderfassung die Bewegung des Filmhalters 26 erhalten bleibt. Um bei einer solchen Kassetteneinheit zu gewährleisten, dass die Detektorzeile trotzdem beim Drehen von Röntgenquelle und Kassetteneinheit hinter dem Aufnahmeschlitz 32 stehenbleibt, kann man die Detektorzeile auf dem Filmhalter verschiebbar anbringen und über eine Gewindespindel gleicher Steigung wie die Gewindespindel 28 mit der Bewegung des Filmhalters 26 entgegengesetzter Geschwindigkeit auf dem Filmhalter bewegen. Damit ist die Gesamtgeschwindigkeit der Detektorzeile 36 dann null .

Man kann auch die Detektorzeile unter Verwendung von Stiften oder anderen mechanischen Mitteln starr mit dem Gehäuse 24 der Kassetteneinheit 20 so verbinden, dass er bleibend hinter dem Aufnahmeschlitz 32 liegt.

Denkbar wäre auch, die Detektorzeile mittels eines für Röntgenstrahlen transparenten Schaumstoffs an die Rückseite des Aufnahmeschlitzes 32 so anzupressen, dass sie sich nicht verschiebt.

Bei diesen Ausführungsformen ist es möglich, die Hauptkomponenten klassischer Kassetteneinheiten 20 und von Kassetteneinheiten, mit denen eine digitale Bildbearbeitung möglich ist, exakt gleich und in größeren Stückzahlen herzustellen.

Bei den oben beschriebenen Ausführungsbeispielen war ein Drehstellungsgeber vorgesehen, dessen Ausgangssignal beim Zusammensetzen des Gesamtbilds aus den einzelnen schlitzförmigen Teilbildern zum Adressieren eines Speichers verwendet wurde.

Verwendet man zum Drehen von Röntgenquelle und Kassetteneinheit einen Motor 22, der sehr gut konstant läuft, so kann der Drehgeber 38 entfallen. Zur Adressierung des Speichers 58 kann man dann einfach einen freilaufenden Taktgeber verwenden, dessen Ausgangssignal der Drehstellung von Röntgenquelle und Kassetteneinheit entspricht.

Anders gesagt: Läuft der Motor 22 in genau vorgegebener Zeitabhängigkeit (insbesondere mit gut konstanter Geschwindigkeit), so kann ein Zeitmesser die Funktion des Stellungsmessers (direkt oder über die Adressierung einer Zeit/Weg-Tabelle) übernehmen.

Änderungen in der Geschwindigkeit des Kassettenvorschubs innerhalb eines Umlaufs, die durch die Gesamtkinematik des Panorama-Röntgengeräts bedingt sind, kann man bei dieser Variante dann unter Verwendung einer Korrekturtabelle kompensieren, in der diese Schwankungen vorab abgelegt sind.

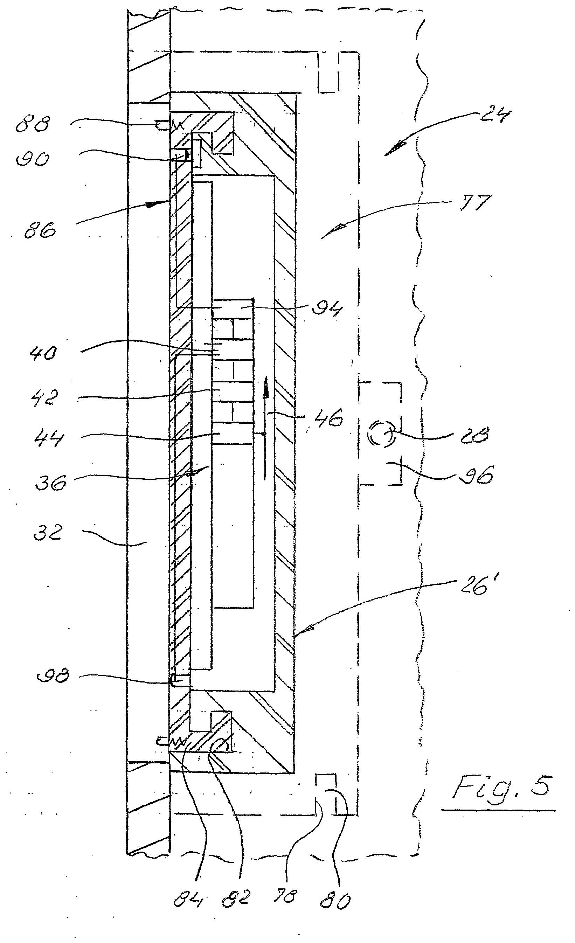

Beim Ausführungsbeispiel nach Figur 5 sind wieder schon weiter oben beschriebene Komponenten mit denselben Bezugszeichen beschrieben und brauchen nicht nochmals im Einzelnen beschrieben zu werden.

Ein Detektorhalter 26' hat die glattflächige Außengeometrie einer klassischen Panoramakassette (Filmträger 26). Er sitzt verrastet oder im Reibschluss in einem Kassettenträger 77. Letzterer läuft mit Führungsnuten 78 im Gleitspiel auf Führungsrippen 80 des Gehäuses 24, welches ebenso wie der Kassettenträger 77 auf einer Seite in Führungsrichtung offen ist, um das Einsetzen und Entnehmen der klassischen Panoramakassetten zu ermöglichen.

Der Detektorhalter 26' hat auf seiner Vorderseite seinerseits Führungsnuten 82, welche Führungsschuhe 84 eines Detektorschlittens 86 im Gleitspiel aufnehmen. Dieser ist wie der Filmhalter 26 insgesamt aus einem für Röntgenstrahlen durchlässigen Material hergestellt und hat in Führungsrichtung verglichen mit dem Detektorhalter 26' geringe Abmessung (z. B. 8 bis 10 mm).

Die Vorderseite des Detektorschlittens 86 trägt oben und unten jeweils einen federvorgespannten Koppelstift 88, der in den Aufnahmeschlitz 32 einrasten kann, um den Detektorschlitten 86 dort zu verrasten.

Im oberen Endabschnitt ist der Detektorschlitten 86 mit einer in Reflexion arbeitenden Lichtschranke 88 versehen, die mit einem in Führungsrichtung verlaufenden Strichgitter 92 zusammenarbeitet, welches auf der Vorderseite des Detektorhalters 26' vorgesehen ist.

Diese Teile bilden zusammen mit einem Auf/Ab-Zähler 94 einen Stellungsgeber 38, der die Lage des Detektorhalters 26' misst, der letztlich durch die Gewindespindel 28 und ein mit diesem zusammenarbeitendes Kassettenträger-Antriebsstück 96 bewegt wird.

Im unteren Endabschnitt weist der Detektorschlitten 86 eine nach vorne weisende Triggerdiode 98 auf, welche eine Aufnahme startet, wenn sie von Röntgenlicht getroffen wird .

Deren Ausgangssignal wird ebenso wie das Ausgangssignal des Stellungsgebers 38 und der Detektorzeile 36 auf den Zeichenverkettungskreis 40 gegeben und von dort zu einer Auswerteeinheit übertragen, wie obenstehend unter Bezugnahme auf Figur 2 beschrieben.

Man erkennt, dass eine Aufnahmeeinheit gemäß Figur 5 sowohl mit klassischen Röntgenfilmen als auch mit digitaler Bilderfassung arbeiten kann. Im ersten Fall wird eine mit einem Röntgenfilm bestückte Panoramakassette (Filmträger 26) in den Kassettenträger 77 geschoben, im zweiten Fall eine Aufnahmeeinheit mit einem Pseudo-Filmträger, dem Detektorträger 26', der gleiche Außengeometrie wie die Panoramakassette hat und den frei verschiebbaren Detektorschlitten 86 trägt.

Letzterer verrastet über die Koppelstifte 88 mit dem Aufnahmeschlitz 32. Beim Verschieben des Detektorträgers 26' im Laufe der Erzeugung eines Panoramabildes gibt der Stellungsgeber 38 ein Signal ab, das zur Abspeicherung der Pixelsignale der Detektorzeile 36 in dem Speicher 58 und damit zum Zusammensetzen des Panoramabildes aus den einzelnen Bildspalten verwendet wird.

Wünscht man das Bild auf das übliche quadratische Pixelformat umzurechnen, können die entsprechenden Bildsignale durch Interpolation ermittelt werden.

Bei den oben beschriebenen Panorama-Aufnahmeeinrichtungen war von einer Detektorzeile ausgegangen worden. Entsprechend der Erfindung werden stattdessen Detektor-Arrays verwendet, die eine Mehrzahl oder Vielzahl von Detektorzeilen umfassen. Bei diesen wird dann die den einzelnen Zeilen zugeordnete Information in Längsrichtung des Arrays mit der Geschwindigkeit verschoben, mit der sich der Filmhalter 26 bewegen würde. Dies kann wieder anhand einer Tabelle erfolgen, in welcher die Geschwindigkeiten für verschiedene Röntgengeräte abgelegt sind.

Die verschobenen Signale können dann spaltenrichtig aufaddiert werden, um eine Bildspalte mit verbessertem Signal/Rausch-Verhältnis zu erhalten.

Um das entsprechende Ansteuerprogramm des Detektor-Arrays mit der Röntgenbelichtung zu synchronisieren, kann man z. B. das entsprechende Programm starten, wenn Röntgenintensitätswerte größer null vom Detektor-Array festgestellt werden oder wenn die Triggerdiode 98 oder ein anderer Start-Sensor anspricht.

In einer weiteren Abwandlung kann man in der Kassetteneinheit 20 einen Positionssensor vorsehen, welcher die Relativposition des Sensors zur Kassette misst und digital überträgt, ähnlich wie unter Bezugnahme auf Figur 1 für den einfachen Fall beschrieben, dass die Achse 18 raumfest ist. Unter diesen Bedingungen erzeugt dann der Positionssensor selbständig die Korrekturtabelle für den Kassettenvorschub und die Taktsignale des Detektor-Arrays.

Wie oben schon dargelegt, besteht bei dem oben beschriebenen Panorama-Röntgengerät keine galvanische Verbindung zwischen den zur digitalen Bilderfassung verwendeten Komponenten und dem eigentlichen Röntgengerät.

Zum netzunabhängigen Betreiben der der Bilderfassung dienenden Komponenten können bekannte Batterie- und Akkutypen verwendet werden, die von der Speicherkapazität und von den geometrischen Abmessungen her ausreichend sind.

Werden Akkus verwendet, so kann man an dem Gehäuse 20 der Kassette Kontakte vorsehen, um nach Abnehmen der Kassette den Akku in einer Ladestation aufzuladen.

Alternativ kann an der Kassette eine Niederspannungsbuchse vorgesehen sein, an welche bei Bedarf ein Ladegerät angeschlossen werden kann. Es versteht sich, dass während des Ladens, welches vorzugsweise nachts erfolgt, das Röntgengerät nicht betrieben werden darf.

An der Kassette kann eine Anzeige vorgesehen sein, die eine Unterspannung der Energieversorgung signalisiert. Zur Reduzierung des Stromverbrauchs wird die Kassetteneinheit 20 so ausgelegt, dass sie drei Betriebszustände aufweist: "AUS", "STANDBY", "AKTIV".

So kann z. B. das Gerät vom Standby-Zustand in den aktiven Betriebszustand geschaltet werden, wenn ein zusätzlich integrierter Röntgensensor die Gegenwart eines Röntgensignals signalisiert oder wenn eine Taste am Kassettengehäuse betätigt wird. Im aktiven Betriebszustand erfolgt die eigentliche Wandlung des Bildsignals und dessen Übertragung zu der Verarbeitungseinheit.

Das Zurückschalten in den Standby-Zustand kann entweder zeitgesteuert (z. B. nach 30 s) oder durch den Abfall des Röntgensignals des Röntgensensors oder des Detektor-Arrays erfolgen, wenn das Programm des Panoramageräts beendet wird.

Für eine lange Betriebsdauer der Kassetteneinheit 20 bis zum nächsten Aufladen ist es auch zweckmäßig, Halbleitersensoren mit niedriger Stromaufnahme einzusetzen, z. B. Komponenten in CMOS-Technologie.

Oben wurde eine Datenübertragung von dem Detektor-Array und vom Drehstellungsgeber zur Verarbeitungseinheit durch ein Funknetz angesprochen. Wählt man die geräteseitigen Modemteile 44 und ggf. 66 so, dass sie wireless LAN-Modemteile sind, so können die Gegen-Modemteile durch entsprechende Schnittstellen gebildet sein, die schon standardmäßig in vielen PCs und Notebooks enthalten sind. Damit fallen keine zusätzlichen Kosten auf der Verarbeitungsseite an.

Anstelle einer Funkdatenübertragung kann man auch eine Infrarot-Datenübertragung verwenden. Das geräteseitige Modemteil und das auswerteseitige Modemteil sind dann entsprechende handelsübliche IR-Modemteile. Dabei kann man im Hinblick auf gute Datenübertragungsbedingungen auswerteseitig ein über Kabel angebundenen IR-Modemteil verwenden.

Obenstehend wurde die Erfindung unter Bezugnahme auf die Anfertigung von Panorama-Aufnahmen im dentalen Bereich beschrieben. Es versteht sich, dass man die erfindungsgemäße Aufnahmeeinrichtung nicht nur für Panoramaaufnahmen sondern gleichermaßen auch für andere Anwendungen in der Medizin oder der Materialprüfung einsetzen kann, bei denen ein ausgedehntes Bild aus einer Aufeinanderfolge von schlitzförmigen Teilbildern erzeugt wird, z.B. eine ECPH-Röntgengerät .
und von den geometrischen Abmessungen her ausreichend sind.

Werden Akkus verwendet, so kann man an dem Gehäuse 20 der Kassette Kontakte vorsehen, um nach Abnehmen der Kassette den Akku in einer Ladestation aufzuladen.

Alternativ kann an der Kassette eine Niederspannungsbuchse vorgesehen sein, an welche bei Bedarf ein Ladegerät angeschlossen werden kann. Es versteht sich, daß während des Ladens, welches vorzugsweise nachts erfolgt, das Röntgengerät nicht betrieben werden darf.

An der Kassette kann eine Anzeige vorgesehen sein, die eine Unterspannung der Energieversorgung signalisiert. Zur Reduzierung des Stromverbrauchs wird die Kassetteneinheit 20 so ausgelegt, daß sie drei Betriebszustände aufweist: "AUS", "STANDBY", "AKTIV".

So kann z. B. das Gerät vom Standby-Zustand in den aktiven Betriebszustand geschaltet werden, wenn ein zusätzlich integrierter Röntgensensor die Gegenwart eines Röntgensignals signalisiert oder wenn eine Taste am Kassettengehäuse betätigt wird. Im aktiven Betriebszustand erfolgt die eigentliche Wandlung des Bildsignals und dessen Übertragung zu der Verarbeitungseinheit.

Das Zurückschalten in den Standby-Zustand kann entweder zeitgesteuert (z. B. nach 30 s) oder durch den Abfall des Röntgensignals des Röntgensensors oder der Detektorzeile erfolgen, wenn das Programm des Panoramageräts beendet wird.

Für eine lange Betriebsdauer der Kassetteneinheit 20 bis zum nächsten Aufladen ist es auch zweckmäßig, Halbleitersensoren mit niedriger Stromaufnahme einzusetzen, z. B. Komponenten im CMOS-Technologie.

Oben wurde eine Datenübertragung von dem Detektor-Array und vom Drehstellungsgeber zur Verarbeitungseinheit durch ein Funknetz angesprochen. Wählt man die geräteseitigen Modemteile 44 und ggf. 66 so, daß sie wireless LAN-Modemteile sind, so können die Gegen-Modemteile durch entsprechende Schnittstellen gebildet sein, die schon standardmäßig in vielen PCs und Notebooks enthalten sind. Damit fallen keine zusätzlichen Kosten auf der Verarbeitungsseite an.

Anstelle einer Funkdatenübertragung kann man auch eine Infrarot-Datenübertragung verwenden. Das geräteseitige Modemteil und das auswerteseitige Modemteil sind dann entsprechende handelsübliche IR-Modemteile. Dabei kann man im Hinblick auf gute Datenübertragungsbedingungen auswerteseitig ein über Kabel angebundenen IR-Modemteil verwenden.

Obenstehend wurde die Erfindung unter Bezugnahme auf die Anfertigung von Panorama-Aufnahmen im dentalen Bereich beschrieben. Es versteht sich, daß man die erfindungsgemäße Aufnahmeeinrichtung nicht nur für Panoramaaufnahmen sondern gleichermaßen auch für andere Anwendungen in der Medizin oder der Materialprüfung einsetzen kann, bei denen ein ausgedehntes Bild aus einer Aufeinanderfolge von schlitzförmigen Teilbildern erzeugt wird, z.B. eine ECPH-Röntgengerät.

## Patentansprüche

1. Panorama-Aufnahmeeinrichtung für ein Panorama-Röntgengerät (10),
a) mit einer Kassetteneinheit (20), welche einen Aufnahmeschlitz (32) aufweist,
b) mit einer Röntgendetektionseinrichtung, welche hinter dem Aufnahmeschlitz (32) angeordnet ist,
c) mit Mitteln zum Erfassen der Stellung der Kassetteneinheit (20), wobei
d) die Detektionseinrichtung ein Detektor-Array mit mehreren gemäß der Form des Aufnahmeschlitzes (32) gestalteten Detektorzeilen (36) umfasst,
e) die Mittel (38) zum Erfassen der Stellung der Kassetteneinheit (20) ein der Drehstellung entsprechendes elektrisches Ausgangssignal bereitstellen,
f) die Ausgangssignale von Detektorzeilen (36) und Mitteln (38) zum Erfassen der Stellung der Kassetteneinheit (20) drahtlos zu einer Verarbeitungseinheit (50) übertragen werden, **dadurch gekennzeichnet, dass**
g) das Detektor-Array eine Ausleseschaltung umfasst, die die Pixel der parallel zum Aufnahmeschlitz (32) verlaufenden Spalten gemäß dem Ausgangssignal der Mittel (38) zum Erfassen der Stellung der Kassetteneinheit (20) in Zeilenrichtung verschiebt.

2. Aufnahmeeinrichtung nach Anspruch 1, **dadurch gekennzeichnet, dass** die Verarbeitungseinheit (50) einen Speicher (58) umfasst, dessen Speicherzellen unter Adressierung durch ein vom Ausgangssignal der Stellungserfassungsmittel (38) abgeleiteten Signals, die von den Detektorzeilen (36) bereitgestellten Bildsignale speichern.

3. Aufnahmeeinrichtung nach Anspruch 1 oder 2, **dadurch gekennzeichnet, dass** die Stellungserfassungsmittel (38) auf der Kassetteneinheit (20) vorgesehen sind und die Ausgangssignale von Detektorzeilen (36) und Stellungserfassungsmitteln (38) über einen Verkettungskreis (40) zu einem Datenpaket zusammengefasst werden, welches über einen einzigen Datenübertragungskanal (44, 46, 48, 52) der Verarbeitungseinheit (50) überstellt wird.

4. Aufnahmeeinrichtung nach Anspruch 3, **dadurch gekennzeichnet, dass** die Kassetteneinheit (20) verschiebbar einen ersten Schlitten (26') trägt, auf dem seinerseits ein die Detektorzeilen (36) tragender zweiter Schlitten (86) angeordnet ist, der parallel zum ersten Schlitten (26') verschiebbar ist und mit dem Aufnahmeschlitz (32) verblockbar ist.

5. Aufnahmeeinrichtung nach Anspruch 4 , **dadurch gekennzeichnet, dass** die Stellungserfassungsmittel (38) ein von der Kassetteneinheit (20) getragenes Strichgitter (92) und einen mit dem zweiten Schlitten (86) verbunden Strich-Lesekopf (90) umfasst.

6. Aufnahmeeinrichtung nach Anspruch 1 oder 2, **dadurch gekennzeichnet, dass** die Stellungserfassungsmittel (38) von der Kassetteneinheit (20) räumlich getrennt sind und die Ausgangssignale von Detektorzeilen (36) und Stellungserfassungsmitteln (38) über getrennte Übertragungskanäle (44, 46, 48, 52; 66, 68, 70, 72) der Verarbeitungseinheit (50) geführt werden.

7. Aufnahmeeinrichtung nach Anspruch 6, **dadurch gekennzeichnet, dass** die Kassetteneinheit (20) einen Filmhalter (26) aufweist, der wahlweise mit der Welle (18), welche die Kassetteneinheit (20) trägt, koppelbar bzw. von dieser trennbar ist (Schaltkupplung 62).

8. Aufnahmeeinrichtung nach einem der Ansprüche 1 bis 7, **dadurch gekennzeichnet, dass** die Detektorzeilen (36) mit einer Faseroptik (74) verbunden sind, deren Achse unter kleinem Winkel zur Achse des Aufnahmeschlitzes (32) geneigt ist und welche eine zu ihrer Achse im Wesentlichen senkrechte Endfläche aufweist, auf welcher die Detektorzeilen (36) im Wesentlichen transversal zur Schlitz-Längsachse angeordnet sind.

## Claims

1. A panoramic recording device for a panoramic X-ray machine (10),
a) having a cassette unit (20) which has a recording slit (32),
b) having an X-ray detection device which is arranged behind the recording slit (32),
c) having means for capturing the position of the cassette unit (20), wherein
d) the detection device comprises a detector array having several detector rows (36) which are designed according to the shape of the recording slit (32),
e) the means (38) for capturing the position of the cassette unit (20) provides an electrical output signal which corresponds to the rotational position,
f) the output signals of the detector rows (36) and the means (38) for capturing the position of the cassette unit (20) are transmitted wirelessly to a processing unit (50), **characterised in that**
g) the detector array has a readout circuit which shifts the pixels of the columns running parallel to the recording slit (32) in the row direction according to the output signal of the means (38) for capturing the position of the cassette unit (20).

2. The recording device according to claim 1, **characterised in that** the processing unit (50) includes a memory (58), the memory cells of which store the image signals provided by the detector rows (36), by being addressed by a signal which is derived from the output signal of the position capturing means (38).

3. The recording device according to claim 1 or claim 2, **characterised in that** the position capturing means (38) is provided on the cassette unit (20), and the output signals from the detector rows (36) and position capturing means (38) are combined via a concatenation circuit (40) into a data packet which is transferred via a single data transmission channel (44, 46, 48, 52) of the processing unit (50).

4. The recording device according to claim 3, **characterised in that** the cassette unit (20) shiftably carries a first cradle (26'), on which, in turn, a second cradle (86) carrying the detector rows (36) is arranged, which can be shifted parallel to the first cradle (26') and which can interlock with the recording slit (32).

5. The recording device according to claim 4, **characterised in that** the position capturing means (38) includes a lined grating (92) which is carried by the cassette unit (20), and a line reading head (90) which is connected to the second cradle (86).

6. The recording device according to claim 1 or claim 2, **characterised in that** the position capturing means (38) is spatially separated from the cassette unit (20), and the output signals of the detector rows (36) and position capturing means (38) are fed via separate transmission channels (44, 46, 48, 52; 66, 68, 70, 72) to the processing unit (50).

7. The recording device according to claim 6, **characterised in that** the cassette unit (20) has a film holder (26), which can be selectively connected to or disconnected from (clutch 62) the shaft (18) which carries the cassette unit (20).

8. The recording device according to one of claims 1 to 7, **characterised in that** the detector rows (36) are connected to a fibre optic (74), the axis of which is inclined at a small angle to the axis of the recording slit (32), and which has an end surface which is substantially perpendicular to its axis, on which end surface the detector rows (36) are arranged substantially transversely to the longitudinal axis of the slit.

## Revendications

1. Dispositif de prise de vue panoramique pour un appareil (10) radiographique panoramique,
a) comprenant une unité (20) de cassette, qui a une fente (32) de prise de vue,
b) comprenant un dispositif de détection de rayon X, qui est disposé derrière la fente (32) de prise de vue,
c) comprenant des moyens de détection de la position de l'unité (20) de cassette,
dans lequel
d) le dispositif de détection comprend un réseau formant détecteur ayant plusieurs lignes (36) conformées selon la forme de la fente (32) de prise de vue,
e) les moyens (38) de détection de la position de l'unité (20) de cassette procurent un signal électrique de sortie correspondant à la position en rotation,
f) les signaux de sortie sont transmis des lignes (36) du détecteur et des moyens (38) de détection de la position de l'unité (20) de cassette sans fil à une unité (50) de traitement,
**caractérisé en ce que**
g) le réseau formant détecteur comprend un circuit de lecture, qui décale, dans la direction des lignes, les pixels des colonnes s'étendant parallèlement à la fente (32) de prise de vue selon le signal de sortie des moyens (38) de détection de la position de l'unité (20) de cassette.

2. Dispositif de prise de vue suivant la revendication 1, **caractérisé en ce que** l'unité (50) de traitement comprend une mémoire (58), dont les cellules mémorisent, avec mise en adresse par un signal déduit du signal de sortie des moyens de détection de position, les signaux d'image procurés par les lignes (36) du détecteur.

3. Dispositif de prise de vue suivant la revendication 1 ou 2, **caractérisé en ce que** les moyens (38) de détection de position sont prévus sur l'unité (20) de cassette et les signaux de sortie des lignes (36) du détecteur et des moyens (38) de détection de position sont rassemblés par un circuit (40) de concaténation en un paquet de données, qui est mis à disposition de l'unité (50) de traitement par un canal (44, 46, 48, 52) unique de transmission de données.

4. Dispositif de prise de vue suivant la revendication 3, **caractérisé en ce que** l'unité (20) de cassette porte à coulissement un premier chariot (26'), sur lequel est disposé, pour sa part, un deuxième chariot (86) portant les lignes (36) du détecteur pouvant coulisser parallèlement au premier chariot (26') et pouvant être bloqué par la fente (32) de prise de vue.

5. Dispositif de prise de vue suivant la revendication 4, **caractérisé en ce que** les moyens (38) de détection de position comprennent un réseau (92) à trait porté par l'unité (20) de cassette et une tête (90) de lecture de trait reliée au deuxième chariot (86).

6. Dispositif de prise de vue suivant la revendication 1 ou 2, **caractérisé en ce que** les moyens (38) de détection de position sont séparés dans l'espace de l'unité (20) de cassette et les signaux de sortie des lignes (36) du détecteur et des moyens (38) de détection de position sont envoyés à l'unité (50) de traitement par des canaux (44, 46, 48, 52; 66, 68, 70, 72) de transmission distincts.

7. Dispositif de prise de vue suivant la revendication 6, **caractérisé en ce que** l'unité (20) de cassette a un porte-film (26), qui, au choix, peut être accouplé à l'arbre (18), qui porte l'unité (20) de cassette, ou en être séparé (accouplement 62 débrayable).

8. Dispositif de prise de vue suivant l'une des revendications 1 à 7, **caractérisé en ce que** les lignes (36) du détecteur sont reliées à une optique (74) à fibre, dont l'axe est incliné suivant un petit angle par rapport à l'axe de la fente (32) de prise de vue et qui a une surface d'extrémité sensiblement perpendiculairement à son axe, sur laquelle les lignes (36) du détecteur sont disposées sensiblement transversalement à l'axe longitudinal de la fente.
